# EUROPEAN PATENT SPECIFICATION

(11) **EP 1 843 941 B1**
(45) Date of publication and mention of the grant of the patent: **25.06.2008**
(21) Application number: 06744263.2
(22) Date of filing: 20.06.2006
(51) Int. Cl.: B64C 1/00, B64D 11/00

(54) **AIRCRAFT INTERIOR MODULE**
MODUL FÜR FLUGZEUGINNENRAUM
MODULE INTÉRIEUR D'UN AÉRONEF

(30) Priority: 20.06.2005 GB 0512541
(43) Date of publication of application: 17.10.2007
(73) Proprietor: James Park Associates Limited, 87A Worship Street London EC2A 2BE (GB)
(72) Inventor: PARK, James, London EC2A 2BE (GB)
(74) Representative: Korenberg, Alexander Tal
(86) International application number: PCT/GB2006/002245
(87) International publication number: WO 2006/136804

(56) References cited:
- DE-A1- 4 218 197
- DE-A1- 10 309 436
- DE-A1- 19 841 799
- US-A- 2 120 477
- US-A- 4 379 533
- US-A- 4 699 336
- US-A- 5 921 504
- US-A1- 2002 043 587
- US-B1- 6 213 427
- US-B1- 6 494 404

## Description

The present invention relates to a method of aircraft manufacture and to aircraft interior modules therefor.

Known methods of aircraft manufacture involve the assembly of the aircraft to a so-called "green stage", which is followed by a separate fitting out stage during which the interior components of the aircraft are added. This series of manufacturing steps means the total manufacturing time for the aircraft includes assembling the aircraft to the green stage and only then adding the interior fittings.

The passenger seats for a commercial aircraft are generally bolted to sets of tracks in the floor of the aircraft cabin. The means of attachment of an aircraft seat is a structurally weak point. It would be desirable to increase the strength of the attachment of the seats.

It is also generally desirable to reduce the weight of an aircraft to make it more fuel efficient. At the same time, essential requirements of the aircraft cabin, such as providing a pressurised environment for the passengers, and generally addressing passenger safety, must be maintained.

A further method disclosed in DE 19841799 A1 comprises providing a lower fuselage shell half adding the cabin interior, and then closing the shell by adding a top shell half.

In a first aspect of the invention, there is provided a method of aircraft manufacture as defined in claim 1. According to the invention an aircraft interior module is inserted into an aircraft fuselage to provide a passenger cabin. Manufacturing time is reduced as compared with the conventional method of manufacturing because the interior fitting can be incorporated within the fuselage at the same time as the aircraft is being assembled to the green stage.

The module may be tubular and may be inserted into the shell in a longitudinal direction. Preferably, the module has an exterior shape that substantially complements the interior shape of the fuselage. Preferably, the module is inserted through the front of the fuselage before the nose cone of the aircraft is put in place. Advantageously, the module may include all interior fittings of the passenger cabins. The manufacture of the aircraft fuselage and the module may be carried out in parallel, thereby shortening the manufacturing time as both the fuselage and the module are being assembled in parallel and combined

In a further aspect of the invention, there is provided an aircraft interior module as defined in claim 19 and an aircraft as defined in claim 10.

The module may include one or more connectors which are arranged to mate with corresponding connectors on the shell when the module is inserted into the fuselage in order to establish the required electrical, hydraulic or pneumatic connections between the module and the fuselage. This provides for a form of 'plug and play' connection. The module may further define a cabin floor of the passenger cabin. Advantageously, the module may have seat structures integrally moulded therewith, for example with the cabin floor. This may result in a significant weight reduction for a given specification of seat rigidity and strength. The cabin floor may be integrally moulded with the rest of the module. The module may be manufactured from fibre-reinforced composite materials, for example the tubular structure may be made from filament wound fibre reinforced composite material. Preferably, each module has an integrity which allows it to be pressurisable either as an item or when connected as a series of modules in a fuselage.

Exemplary specific embodiments are now described with reference to the accompanying drawings in which:
Figure 1 is a flow diagram of a manufacturing method according to the specific embodiment;
Figure 2 illustrates insertion of an aircraft interior module into a fuselage; and
Figure 3 is a cross-sectional view of the module inserted into the fuselage.

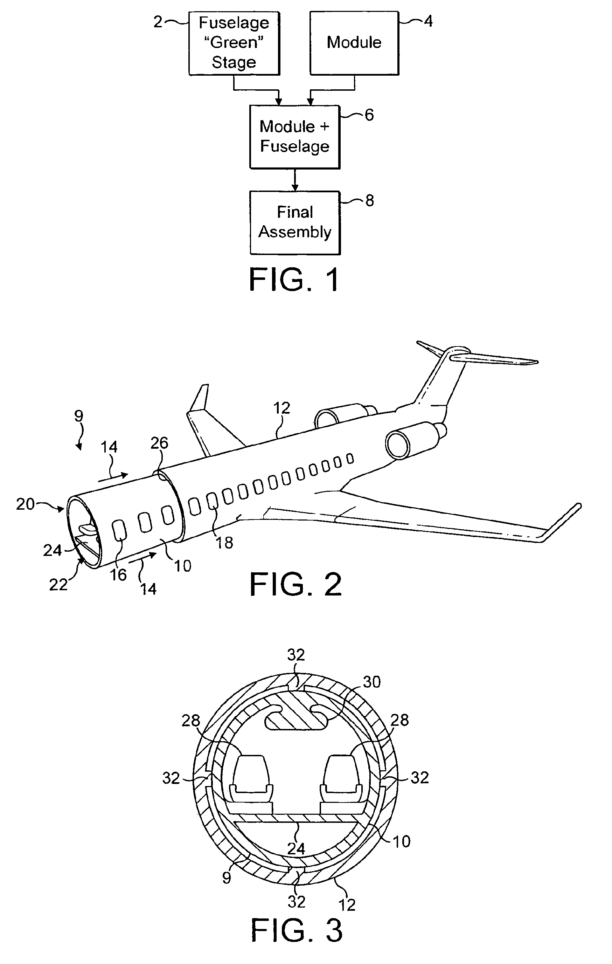

The method of aircraft manufacture according to a specific embodiment of the invention is now described with reference to Figure 1. As in conventional aircraft manufacture, the fuselage of the aircraft is assembled to a 'green' stage at step 2, which would normally be followed by a series of steps fitting out the interior of the aircraft. Independently of the assembly of the fuselage at step 2, an aircraft interior module is assembled at step 4. This may happen at the same time as step 2, or the module may have been manufactured previously to step 2 and been kept in stock for future use. Of course, it is understood that step 4 may be carried out at any time independent of step 2. The aircraft interior module contains the interior fittings of the aircraft such that the aircraft is fitted out in a single step 6 when the module is inserted into the fuselage. Insertion of the module at step 6 is then followed by final assembly at step 8, including connecting electrical, hydraulic and/or pneumatic connections as required. In the specific embodiment, the module is inserted into the fuselage before assembly of a nose cone of the aircraft and thus the final assembly 8 includes the assembly of the nose cone after the module has been inserted.

The aircraft interior module and its insertion into the fuselage is now described in further detail with reference to Figures 2 and 3. The module 9 includes a tubular structure 10 which is inserted into the fuselage 12 along its longitudinal direction indicated by arrows 14. The module is generally a complementary clearance fit within the fuselage. Where required, the tubular structure includes openings 16 arranged to line up with windows 18 in the fuselage. The module defines a passenger cabin and cargo space therein, the passenger cabin 20 and cargo space 22 being separated by a cabin floor 24 formed inside the module. In the specific embodiment shown in Figure 2, the fuselage is only partially assembled leaving a forward opening 26 through which the module is inserted. The fuselage may be assembled as far as possible to still allow insertion of the module. Typically, the fuselage will be assembled up to the point of assembly of the nose cone, which is assembled after insertion of the module at step 8.

Figure 3 depicts a cross-section through the fuselage 12 and module 9. The interior of the module includes passenger seats 28 supported above the cabin floor 24 and luggage compartments 30. Of course, it will be understood that the interior fittings of the module will depend on the specific application and can be varied in a manner to suit a particular application as will be apparent to the skilled person.

The seats 28 and luggage compartments 30, as well as any other suitable interior fittings may be moulded together with the tubular structure 10 or cabin floor 24 of the module, resulting in significant weight savings. For example, the tubular structure 10, the cabin floor 24, and all interior fittings may be manufactured from fibre-reinforced composite materials which can provide structures which are at the same time sufficiently stiff and tough, as well as lightweight. Fibre reinforced composite materials have mechanical properties which are non-isotropic and in order to maximise weight savings, the orientation of the fibres may be arranged such that the materials have maximal strength in the most critical directions.

The tubular structure 10 of the module 9 is secured to the fuselage 12 of the aircraft by supporting structures 32 arranged around the circumference of the tubular structure 10. In one specific embodiment, the supporting structures 32 may define frangible connections between the module 9 and the fuselage 11, which are sufficiently strong to withstand normal operating conditions but are arranged to break when exposed to forces of a magnitude typically encountered during an aircraft crash. Thus, in the event of an aircraft crash, the frangible connections 32 absorb some of the energy of the crash as their fracture energy and further energy of the crash is absorbed by relative motion of the module 9 with respect to the fuselage 11. This absorption of energy may be increased, for example, by providing the outer surface of the tubular structure 10 and the inner surface of fuselage 12 with friction enhancing materials. Thus, this arrangement reduces the amount of energy absorbed by the passengers during an aircraft crash thereby increasing passenger safety.

According to the invention, a fibre reinforced hull of the module is bonded to the fuselage by an adhesive, possibly using a honeycomb interface/substrate. Further weight savings may be achieved by also making the fuselage from fibre reinforced material (e.g. filament wound), the required strength being provided by the bonded structure of the composite module and fuselage.

Although Figure 2 depicts the module as being open at its front end (and the module may also be open at its back end, not shown in Figure 2), the module may advantageously be closed at both its ends and may then provide a self-contained pressurisable vessel for maintaining cabin pressure. This reduces the stress on the fuselage which is then not required to maintain cabin pressure. This can be exploited to obtain advantageous weight savings by using lighter materials for the whole of the fuselage. Of course, this means that the tubular structure or hull of the module will have to be produced to a higher specification in order to withstand the pressure differential across it. This can be efficiently achieved by using a filament wound fibre reinforced material for the hull of the module.

The module can be formed to fill an aircraft fuselage on its own. Alternatively, modules can be used as sections which, when inserted one after another, fill in the fuselage. In this case suitable seals are arranged on the fore and aft edges to seal against adjacent modules.

In order to maximise the benefits of the new manufacturing technology disclosed herein, the layout of services to the cabin interior is preferably adapted to allow for efficient connection of any electric, hydraulic or pneumatic connections to the module. In order to increase manufacturing efficiency, these connections should be provided with as few as possible connection points. In one particularly advantageous embodiment, the connections are provided in a 'plug and play' manner such that the respective connectors of the module and the fuselage mate automatically (for example slidingly) as the module is inserted into the fuselage.

The disclosed new manufacturing method is particularly, although not exclusively, applicable to small jets and turboprop aircrafts.

The skilled person will appreciate that variations of the disclosed arrangements are possible without departing from the invention. Accordingly, the above description of specific embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A method of aircraft manufacture including inserting an aircraft interior module including a fibre-reinforced composite hull into an aircraft fuselage and bonding the module to the fuselage using an adhesive; wherein the module defines a passenger cabin therein.

2. A method as claimed in claim 1 wherein the module includes at least some of the interior fittings of the aircraft.

3. A method as claimed in claim 1 or claim 2 in which the module is inserted before assembly of the nose cone of the aircraft.

4. A method as claimed in claim 1, claim 2 or claim 3 in which the module is inserted in a longitudinal direction.

5. A method as claimed in claim 1, claim 2, claim 3 or claim 4 in which the module includes all interior fittings of the cabin.

6. A method as claimed in any one of the preceding claims in which the fuselage and module are manufactured in parallel.

7. A method as claimed in claim 1 in which a hull of the module is manufactured from filament wound composite material.

8. A method as claimed in claim 1 or claim 7 in which the module is bonded using a honeycomb interface or substrate.

9. A method as claimed in claim 8 in which the fuselage is made from fibre reinforced composite.

10. An aircraft including an interior module inserted into an aircraft fuselage, the module including a fibre reinforced composite hull having a substantially tubular section and defining a passenger cabin therein; wherein the module is bonded to the fuselage using an adhesive.

11. An aircraft as claimed in claim 10 in which one or more connectors on the module are arranged to slidingly mate with corresponding connectors of the fuselage, thereby establishing one or more of electrical, hydraulic or pneumatic connections between the module and the fuselage.

12. An aircraft as claimed in claim 10 or claim 11 in which the module defines a cabin floor therein.

13. An aircraft as claimed in claim 12 in which the module defines passenger seat structures integrally moulded with the module.

14. An aircraft as claimed in claim 12 or claim 13 in which the cabin floor is integrally moulded with the module.

15. An aircraft as claimed in any one of claims 10 to 14 in which the hull is manufactured from filament wound composite material.

16. An aircraft as claimed in any one of claims 10 to 15 in which the module is arranged to act as a pressurisable vessel.

17. An aircraft as claimed in any one of claims 10 to 16, in which the module is bonded using a honeycomb interface or substrate.

18. An aircraft as claimed in claim 17 in which the fuselage is made from fibre reinforced composite.

19. An aircraft interior module insertable into an aircraft fuselage, the module including a hull having a substantially tubular section and defining a passenger cabin and a cabin floor therein; wherein the cabin floor is integrally moulded with the module.

20. A module as claimed in claim 19 which defines passenger seat structures integrally moulded with the module.

21. A module as claimed in claim 19 or claim 20 which is manufactured from fibre reinforced composite.

22. A module as claimed in claim 21 in which the hull is manufactured from filament wound composite material.

## Patentansprüche

1. Verfahren zur Flugzeugherstellung, umfassend das Einsetzen eines Moduls für den Flugzeuginnenraum mit einer faserverstärkten Verbund-Hülle in einen Flugzeugrumpf, und das Verbinden des Moduls mit dem Rumpf unter Verwendung eines Klebemittels; wobei das Modul eine sich darin befindliche Passagierkabine definiert.

2. Verfahren nach Anspruch 1, wobei das Modul zumindest einige der Innenausstattungsteile des Flugzeugs enthält.

3. Verfahren nach Anspruch 1 oder 2, wobei das Modul eingesetzt wird, bevor die Spitze des Flugzeugs angeordnet wird.

4. Verfahren nach Anspruch 1, 2 oder 3, wobei das Modul in Längsrichtung eingesetzt ist.

5. Verfahren nach Anspruch 1, 2, 3 oder 4, wobei das Modul alle Innenausstattungsteile der Kabine enthält.

6. Verfahren nach einem der vorhergehenden Ansprüche, wobei der Rumpf und das Modul parallel hergestellt sind.

7. Verfahren nach Anspruch 1, wobei eine Hülle des Moduls aus einem mit Wickeltechnik produzierten Verbundmaterial hergestellt ist.

8. Verfahren nach Anspruch 1 oder 7, wobei das Modul unter Verwendung eines wabenförmigen Zwischenstücks oder Substrats verbunden ist.

9. Verfahren nach Anspruch 8, wobei der Rumpf aus faserverstärktem Verbundwerkstoff hergestellt ist.

10. Flugzeug mit einem Innenraummodul, das in einen Flugzeugrumpf eingesetzt ist, wobei das Modul eine faserverstärkte Verbund-Hülle enthält, die einen im Wesentlichen rohrförmigen Abschnitt aufweist und eine sich darin befindliche Passagierkabine definiert; wobei das Modul mit dem Rumpf durch ein Klebemittel verbunden ist.

11. Flugzeug nach Anspruch 10, wobei eine oder mehrere Verbindungselemente auf dem Modul angeordnet sind, um mit den entsprechenden Verbindungselementen des Rumpfs gleitend ineinander zu greifen, wodurch entweder elektrische, hydraulische und/oder pneumatische Verbindungen zwischen dem Modul und dem Rumpf hergestellt werden.

12. Flugzeug nach Anspruch 10 oder 11, wobei das Modul einen darin befindlichen Kabinenboden definiert.

13. Flugzeug nach Anspruch 12, wobei das Modul Passagiersitz-Strukturen definiert, die mit dem Modul einstückig geformt sind.

14. Flugzeug nach Anspruch 12 oder 13, wobei der Kabinenboden mit dem Modul einstückig geformt ist.

15. Flugzeug nach einem der Ansprüche 10 bis 14, wobei die Hülle aus einem mit Wickeltechnik produziertn Verbundmaterial hergestellt ist.

16. Flugzeug nach einem der Ansprüche 10 bis 15, wobei das Modul angeordnet ist, um als unter Druck setzbarer Behälter zu agieren.

17. Flugzeug nach einem der Ansprüche 10 bis 16, wobei das Modul unter Verwendung eines wabenförmigen Zwischenstücks oder Substrats verbunden ist.

18. Flugzeug nach Anspruch 17, wobei der Rumpf aus einem faserverstärkten Verbundwerkstoff hergestellt ist.

19. Modul für den Flugzeuginnenraum, das in einen Flugzeugrumpf einsetzbar ist, wobei das Modul eine Hülle enthält, die einen im Wesentlichen rohrförmigen Abschnitt aufweist und eine sich darin befindliche Passagierkabine und einen sich darin befindlichen Kabinenboden definiert; wobei der Kabinenboden mit dem Modul einstückig geformt ist.

20. Modul nach Anspruch 19, das Passagiersitz-Strukturen definiert, die mit dem Modul einstückig geformt sind.

21. Modul nach Anspruch 19 oder 20, das aus einem faserverstärkten Verbundwerkstoff hergestellt ist.

22. Modul nach Anspruch 21, wobei die Hülle aus einem mit Wickeltechnik produzierten Verbundmaterial hergestellt ist.

## Revendications

1. Procédé de fabrication d'un aéronef, comprenant l'insertion d'un module intérieur d'aéronef, comprenant une coque composite renforcée par des fibres, dans un fuselage d'aéronef et la fixation du module au fuselage en utilisant un adhésif ; dans lequel le module définit une cabine de passagers à l'intérieur.

2. Procédé selon la revendication 1, dans lequel le module comprend au moins certains des équipements intérieurs de l'aéronef.

3. Procédé selon la revendication 1 ou la revendication 2, dans lequel on insère le module avant l'assemblage de la pointe avant de l'aéronef.

4. Procédé selon la revendication 1, la revendication 2 ou la revendication 3, dans lequel on insère le module dans une direction longitudinale.

5. Procédé selon la revendication 1, la revendication 2, la revendication 3 ou la revendication 4, dans lequel le module comprend tous les équipements intérieurs de la cabine.

6. Procédé selon l'une quelconque des revendications précédentes, dans lequel le fuselage et le module sont fabriqués en parallèle.

7. Procédé selon la revendication 1, dans lequel une coque du module est fabriquée à partir d'un matériau composite à enroulements filamentaires.

8. Procédé selon la revendication 1 ou la revendication 7, dans lequel le module est fixé en utilisant une interface ou un substrat en nid d'abeilles.

9. Procédé selon la revendication 8, dans lequel le fuselage est formé d'un composite renforcé par des fibres.

10. Aéronef comprenant un module intérieur inséré dans un fuselage d'aéronef, le module comprenant une coque composite renforcée par des fibres, ayant une section sensiblement tubulaire et définissant une cabine de passagers à l'intérieur ; dans lequel le module est fixé au fuselage en utilisant un adhésif.

11. Aéronef selon la revendication 10, dans lequel on aménage un ou plusieurs raccords sur le module de manière qu'ils s'accouplent par glissement avec des raccords correspondants du fuselage, établissant de la sorte une ou plusieurs connexions électriques, liaisons hydrauliques ou liaisons pneumatiques entre le module et le fuselage.

12. Aéronef selon la revendication 10 ou la revendication 11, dans lequel le module définit un sol de cabine à l'intérieur.

13. Aéronef selon la revendication 12, dans lequel le module définit des structures de sièges de passagers moulées d'un seul tenant avec le module.

14. Aéronef selon la revendication 12 ou la revendication 13, dans lequel le sol de cabine est moulé d'un seul tenant avec le module.

15. Aéronef selon l'une quelconque des revendications 10 à 14, dans lequel la coque est fabriquée à partir d'un matériau composite à enroulements filamentaires.

16. Aéronef selon l'une quelconque des revendications 10 à 15, dans lequel le module est agencé de manière à agir comme un conteneur pouvant être placé sous pression.

17. Aéronef selon l'une quelconque des revendications 10 à 16, dans lequel le module est fixé en utilisant un substrat ou une interface en nid d'abeilles.

18. Procédé selon la revendication 17, dans lequel le fuselage est formé d'un composite renforcé par des fibres.

19. Module intérieur d'aéronef que l'on peut insérer dans un fuselage d'aéronef, le module comprenant une coque de section sensiblement tubulaire et définissant une cabine de passagers et un sol de cabine à l'intérieur ; dans lequel le sol de cabine est moulé d'un seul tenant avec le module.

20. Module selon la revendication 19, qui définit des structures de sièges de passagers moulées d'un seul tenant avec le module.

21. Module selon la revendication 19 ou la revendication 20, qui est fabriqué à partir d'un composite renforcé par des fibres.

22. Module selon la revendication 21, dans lequel la coque est fabriquée à partir d'un matériau composite à enroulements filamentaires.
